# EUROPEAN PATENT SPECIFICATION

(11) **EP 2 348 428 B1**
(45) Date of publication and mention of the grant of the patent: **27.04.2016**
(21) Application number: 09817230.7
(22) Date of filing: 17.09.2009
(51) Int. Cl.: G06F 17/30, H04L 29/08, H04L 29/06, H04L 29/12

(54) **METHOD AND DEVICE FOR PROVIDING CAPABILITY INFORMATION OF CONDITION BASED URIS SELECTION SERVER**
VERFAHREN UND VORRICHTUNG ZUR BEREITSTELLUNG VON KAPAZITÄTSINFORMATIONEN EINES CBUS-SERVERS
PROCÉDÉ ET DISPOSITIF POUR FOURNIR DES INFORMATIONS DE FONCTIONNALITÉ D'UN SERVEUR DE SÉLECTION D'URI BASÉE SUR UN ÉTAT

(30) Priority: 26.09.2008 CN 200810166360; 13.05.2009 CN 200910203004
(43) Date of publication of application: 27.07.2011
(73) Proprietor: SnapTrack, Inc., San Diego, CA 92121 (US)
(72) Inventor: CHANG, Xinmiao, Shenzhen Guangdong 518129 (CN); SONG, Yue, Shenzhen Guangdong 518129 (CN); WANG, Rui, Shenzhen Guangdong 518129 (CN); LIU, Haitao, Shenzhen Guangdong 518129 (CN); LI, Xiaojuan, Shenzhen Guangdong 518129 (CN)
(74) Representative: Dunlop, Hugh Christopher
(86) International application number: PCT/CN2009/073996
(87) International publication number: WO 2010/037316

(56) References cited:
- WO-A1-01/03019
- WO-A1-2008/098592
- CN-A- 1 367 901
- CN-A- 1 794 692
- CN-A- 1 859 322
- US-A1- 2007 124 294
- SHESTAKOV D ET AL: "DEQUE: querying the deep web", DATA & KNOWLEDGE ENGINEERING, ELSEVIER BV, NL, vol. 52, no. 3, 1 March 2005 (2005-03-01), pages 273-311, XP027783951, ISSN: 0169-023X [retrieved on 2005-03-01]
- ANONYMOUS: 'Condition Based URIs Selection Requirements ; OMA-RD-CBUS-V1_0-20080922-D', [Online] no. 1.0, 22 September 2008, pages 1 - 22, XP064158094 OMA-RD-CBUS-V1_0-20080922-D, OPEN MOBILE ALLIANCE (OMA), 4330 LA JOLLA VILLAGE DR., SUITE 110 SAN DIEGO, CA 92122 ; USA Retrieved from the Internet: <URL:ftp/Public_documents/COM/COM-XDM/Perma nent_documents/> [retrieved on 2008-09-22]

## Description

### FIELD OF THE INVENTION

The present invention relates to telecommunication technologies and in particular, to Uniform Resource Identifier (URI) selection technologies at service session establishment stage in the telecommunication technologies, and more particular to a method and an apparatus for providing capability information of a Condition Based URIs Selection (CBUS) server.

### BACKGROUND OF THE INVENTION

In existing communication technology, different user information is located at different servers, for example, presence information exists at a presence server, and the presence information includes online information of a user, network bearing information, application capability information of a client device, and interests and moods of a user; and location information exists at a location server, and the location information indicates the current geographical location of the user. If it is required to obtain a list of users located around a store and in an online state, judgment and selection need to be performed according to the current presence information and the geographical location information of the user. A current method includes: first, a requester sends a request to obtain URIs of users in an online state to the presence server, then the requester sends a request to obtain URIs of users having a geographical location around the store to the location server, and the requester perfonns comprehensive analysis on the users, so as to obtain the users meeting the requirements of being located around the store and in the online state. The operation requires the requester to send requests to different servers to obtain users meeting the conditions and to compare returned results, and at this time, the requester needs to know which type of information is stored in each server, and the terminal equipment of the requester needs to have interfaces to different servers, which is very inconvenient for the requester.

As the CBUS topic is proposed, the disadvantages of the prior art are solved. The requester may send the requirements or conditions of the assessment information such as the geographical location and the presence information to the CBUS server, and the CBUS server is connected to various information servers, and obtains, for example, the presence information from the presence server and the geographical location information from the location server, and performs comprehensive analysis on the results, that is, performs assessment according to the conditions of the assessment information of the requester, and sends the URIs of users meeting the conditions of the requester to the requester, such that the requester does not need to deal with various servers, and only needs to submit the demand to the CBUS server.

When a service provider of the CBUS server puts the CBUS server into operation, the capability information supported by the CBUS server is released on relevant web site or in other artificial mode. Before submitting the request to the CBUS server, the requester queries, from the web site of the provider owning the CBUS server in advance, the capability information such as the type of assessment information and the assessment capability that can be obtained by the CBUS server. However, when the capability supported by the CBUS server or the type of information server changes, if the requester does not query on the web site of the provider or does not receive a notification of the provider in advance, the request submitted by the requester is likely to include conditions which cannot be supported by the CBUS server, and thus resulting in an invalid user request.

"Condition Based URIs Selection Requirements ; OMA-RD-CBUS-V1_0-20080922-D", OMA-EZD-CBUS-V1_0-20080922-D, OPEN MOBILE ALLIANCE (OMA), 4330 LA JOLLA VILLAGE DR.; SUITE 110 SAN DIEGO, CA 92122 ; USA, no. 1.0 22 September 2008 (2008-09-22), pages 1-22, discloses a condition based on information elements related to users, wherein the information content is typically changing over time, for example presence status information and user's geographical location, and/or user's personal information.

US 2007/0124294A1 discloses a method for searching for information. The method includes the step of a client sending an HTTP POST search request to an aggregation proxy device. A search expression contained in the HTTP POST search request includes: User profile conditions: "gender=female, city=Shenzhen, hobby=tennis ball"; and the request indicates that the returned search result should include a user profile such as user URI, nickname, etc., and presence information such as whether the user is online, etc. The aggregation proxy device forwards the request to the search proxy device, which searches in the shared user profile XDM server for the information of XML documents meeting the user profile conditions in the search expression.

WO01/03019A1 discloses a system for enabling searching of stored information. The system includes a search request form including information relating to a search request, the search request form including coded data indicative of an identity of the search request form and of at least one reference point of the search request form; and a computer system for receiving indicating data from a sensing device for identifying at least one parameter relating to the search request. The indicating data are indicative of the identity of the search request form and a position of the sensing device relative to the search request form, and the sensing device senses the indicating data using at least some of the coded data. In one particular embodiment, the present invention provides a method of enabling users to search stored information, the method including the steps of providing a user with a search request form including information relating to a search request, the search request form including coded data indicative of an identity of the search request form and of at least one reference point of the search request form; receiving in a computer system, indicating data from a sensing device, operated by the user, regarding the identity of the search request form and a position of the sensing device relative to the search request form, the sensing device, when placed in an operative position relative to the search request form, sensing the indicating data using at least some of the coded data; and identifying, in the computer system and from the indicating data, at least one parameter relating to the search request.

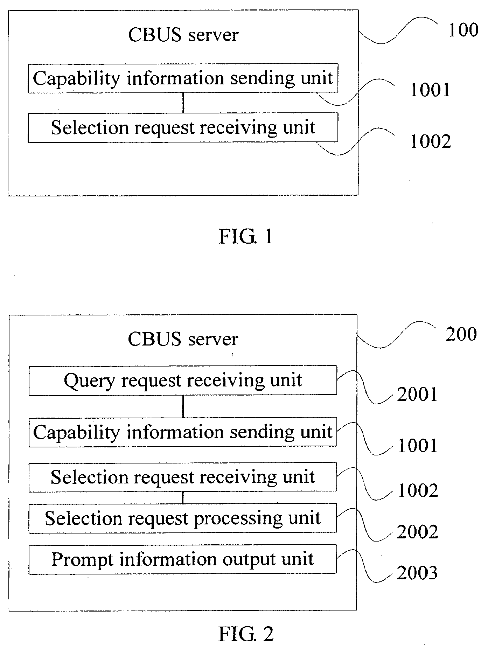

Document " DEQUE: querying the deep web" (Shestakov D. et. al.) discloses that a HTML form is a section of a document containing normal content, markup, special elements called controls (checkboxes, radio buttons, menus, etc.), and labels on those controls. Users generally "complete" a form by modifying its controls (entering text, selecting menu items, etc.), before submitting the form to an agent for processing (e.g., to a Web server, to a mail server, etc.). These form controls are also known as *form fields.* An HTML form is embedded in its web page by a pair of "begin" and "end" <FORM> tags. Each HTML form contains a set of form fields and the URL of a server-side program (e.g., a CGI program) that processes the form fields' input values and returns a set of *result pages.* There are three essential attributes of the FORM element that specify how the values submitted with the form are processed: the value of the ac t i on attribute corresponds to the URL of a form processing agent (server-side program), the HTTP method used to submit the form is defined by the method_ attribute, and the enctype attribute specifies the content type used for the form submission. For a web form F, the submission information of *F* (denoted as *subinfo(F))* is defined as three string elements specifying the form action, the HTTP method and the content type. That is, *subinfo(F)= {actio*n, *method, enctype}.* For example, the submission information of the form shown in Fig. 1(a) is given by: *subinfo(Find(arForm) ={"http:i*/*autotrder.comlfindcarlfindcar_form2.jtmpl?ac_afilt=none", "get", "app*/*i cationlx-www-form-urlencoded"{.* Note that two forms F1 and *1-72* have the *same* submission information if *subinfo(F1)= subinfo(F2).*

### SUMMARY OF THE INVENTION

In order to overcome disadvantages in the prior art, the present invention is directed to a method and an apparatus for providing capability information of a CBUS server, so as to solve a problem that a CBUS client cannot know exactly capability supported by a CBUS server in time before submitting a request to the CBUS server, such that the CBUS client can exactly describe a URI selection request according to the capability information.

An embodiment of the present invention provides a method for providing capability information of a CBUS server, where the method includes:
receiving a capability information query request sent by a CBUS client;
sending a capability information of the CBUS server to the CBUS client according to the capability information query request sent by the CBUS client;
receiving a first URI selection request generated by the CBUS client according to the received capability information.

An embodiment of the present invention provides another method for providing capability information of a CBUS server, where the method includes:
sending a capability information query request to a CBUS server;
receiving a capability information of the CBUS server sent by the CBUS server; and
generating a first URI selection request according to the received capability information of the CBUS server; and
sending the first URI selection request to the CBUS server.

An embodiment of the present invention provides a CBUS server, where the CBUS server includes:
a capability information sending unit, adapted to send capability information of the CBUS server to a CBUS client; and
a selection request receiving unit, adapted to receive a first URI selection request generated by the CBUS client according to the capability information;
a query request receiving unit, adapted to receive a capability information query request sent by the CBUS client.

An embodiment of the present invention provides a CBUS client device, where the CBUS client device includes:
a capability information receiving unit, adapted to receive capability information of a CBUS server sent by the CBUS server; and
a selection request sending unit, adapted to generate a first URI selection request according to the received capability information of the CBUS server, and send the first URI selection request to the CBUS server;
wherein the client device is further configured to send a capability information query request to the CBUS server.

The present invention has the following beneficial effects. Through the technical solutions of the present invention, a client knows exactly capability information supported by a CBUS server in time before submitting a request, and utilizes the capability information to describe a URI selection request generated by the CBUS client, and thus avoiding sending an invalid URI selection request.

### BRIEF DESCRIPTION OF THE DRAWINGS

FIG 1 is a structural block diagram of an apparatus for providing capability information of a CBUS server according to an embodiment of the present invention;
FIG 2 is a structural block diagram of a CBUS server according to an embodiment of the present invention;
FIG 3 is a flow chart of a method for providing capability information of a CBUS server according to an embodiment of the present invention;
FIG 4 is a schematic view of a connection relation of a CBUS server and an information server according to an embodiment of the present invention;
FIG 5 is a URI selection request list according to Embodiment 1 of the present invention;
FIG 6 is a list of information servers according to Embodiment 1 of the present invention;
FIGs. 7 to 9 are URI selection request lists according to.Embodiment 2 of the present invention;
FIGs. 10 to 12 are URI selection request lists according to Embodiment 3 of the present invention;
FIG. 13 is a structural block diagram of a client device according to an embodiment of the present invention;
FIG. 14 is a schematic view of connection of a CBUS system according to an embodiment of the present invention; and
FIG. 15 is a flow chart of a method for providing capability information of a CBUS server according to an embodiment of the present invention.

### DETAILED DESCRIPTION OF THE EMBODIMENT

The specific implementation of the present invention is described below with reference to the accompanying drawings. As shown in FIG. 1, a CBUS server 100 of this embodiment includes: a capability information sending unit 1001 and a selection request receiving unit 1002. The capability information sending unit 1001 sends capability information of the CBUS server to a CBUS client; and the CBUS client as a requester sends a URI selection request to the selection request receiving unit 1002 according to the capability information.

As shown in FIG. 2, a CBUS server 200 of this embodiment includes: a query request receiving unit 2001, a capability information sending unit 1001, a selection request receiving unit 1002, a selection request processing unit 2002, and a prompt information output unit 2003.

A method for providing capability information by the CBUS server 200 includes the following steps.
(I) The query request receiving unit 2001 receives a capability information query request sent by a requester (CBUS client) before the requester submitting a URI selection request. The capability information query request is adapted to query a certain type of capability information of the CBUS server, and the capability information query request includes: at least one of query requests of an type of assessment information that can be obtained by the CBUS server (generally, when the assessment information is provided by the server, if a type (types) of the information server(s) with which the CBUS server supports to interact is (are) known, the type(s) of the assessment information capable of being obtained by CBUS is known), operation capability of the CBUS server, special character processing capability of the CBUS server, and information of an information assessment mode supported by the CBUS server.
   The requester may also send a query request for querying all the capability information of the CBUS server, for example, a query request of all the capability of the CBUS server including the type(s) of information server(s) with which the CBUS server supports to interact, the operation capability, and the special character processing capability. Definitely, all the capabilities of the CBUS server may also include the information assessment mode supported by the CBUS server. That is, the query request is adapted to query all the capability information currently owned by the CBUS server.
   After the CBUS server 200 receives the query request of the requester, the capability information sending unit 1001 returns designated capability information in the query request or all the capability information of the CBUS server including the type of information server with which the CBUS server supports to interact, the operation capability, and the special character processing capability to the requester; similarly, all the capability information of the CBUS server may also include the information of an information assessment mode supported by the CBUS server.
(II) The capability information sending unit 1001 actively pushes all the capability information or updated capability information to the CBUS client; and the CBUS client receiving the capability information sends a URI selection request to the CBUS server.
(III) After the selection request receiving unit 1002 receives the URI selection request of the requester, the prompt information output unit 2003 judges that the URI selection request includes the capability not supported by the CBUS server currently, and returns error and prompt information to the requester, so as to notify the requester of the capability information that can be supported by the CBUS server currently in the prompt information.

The capability information of the CBUS server includes: a list of information servers with which the CBUS server interacts to obtain information; and/or a logical operation relation that can be supported by an assessment module of the CBUS server; and/or information of special characters and special conditions included in the conditions submitted by the requester supported by the CBUS server; and/or information of an information assessment mode supported by the CBUS server. The selection request processing unit 2002 processes the capability information in the URI selection request. For example, the selection request processing unit 2002 performs a special character processing and/or an operation processing on the received URI selection request; herein, the operation processing includes: a random operation processing and/or a logical operation processing and/or an algebraic operation processing.

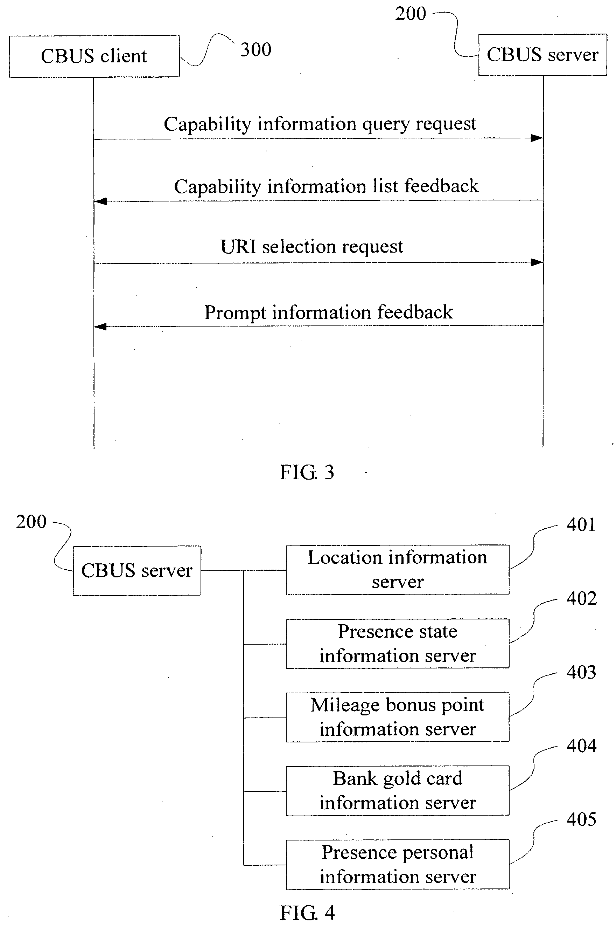

As shown in FIG. 3, the CBUS client 300 as a requester actively queries the CBUS server 200 about the capability information supported by the CBUS server, or the CBUS server 200 actively pushes the capability information supported by the CBUS server to the CBUS client through interacting with the CBUS client. When the capability supported by the CBUS server 200 is expanded or some capabilities are not supported any more, the CBUS client 300 may know the situation in time, and thus avoiding sending the invalid request. If the CBUS client 300 does not know the capability information supported by the CBUS server 200 before submitting the request, and the URI selection request includes a demand that the CBUS server 200 cannot meet, the CBUS server 200 may also return error and prompt information to the CBUS client 300, and the returned information includes the conditions in the request that cannot be supported, and the information list that can be supported by the CBUS server 200, wherein the information in the list is of the same type as the information in the condition that cannot supported by the CBUS server. For example, the request conditions sent by the CBUS client 300 include the information server with which the CBUS server 200 does not support to interact, the CBUS server 200 returns error and prompt information to the CBUS client to notify the CBUS client 300 that CBUS server 200 currently does not support to obtain information from a certain informations server, and returns the list of information servers, with which the CBUS server 200 currently supports to interact, to the CBUS client.

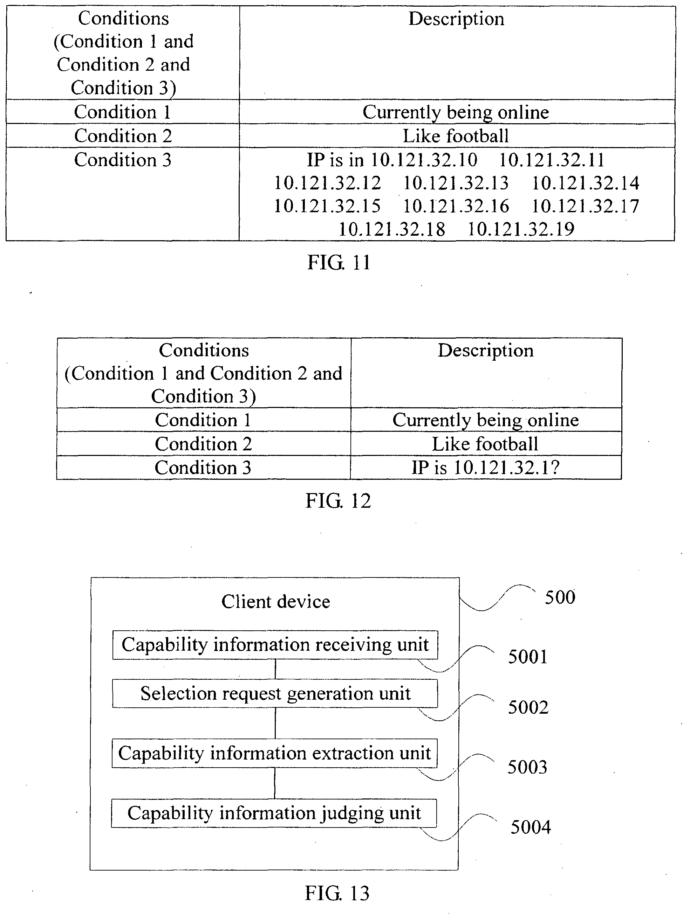

As shown in FIG. 13, a client device 500 of a CBUS server is shown in the embodiment. The client device 500 may be, for example, a PC, a mobile phone, or a notebook computer. The client device 500 includes: a capability information receiving unit 5001, adapted to receive capability information of the CBUS server; a selection request generation unit 5002, adapted to generate a URI selection request according to the capability information; for example, the selection request generation unit 5002 displays the received capability information in an interaction interface in a list form, and generates the URI selection request according to the capability information in the list. The capability information extraction unit 5003 is adapted to extract the capability information involved in the URI selection request input by the user; the capability information judging unit 5004 is adapted to judge whether the extracted capability information belongs to the capability information sent by the CBUS server, and if yes, send the URI selection request to the CBUS server; otherwise, prompt to modify the URI selection request. The selection request generation unit 5002, the capability information extraction unit 5003, and the capability information judging unit 5004 may be a specific form of a selection request sending unit. The selection request sending unit is adapted to generate a URI selection request according to the received capability information of the CBUS server, and send the URI selection request to the CBUS server. The selection request sending unit is further adapted to generate a second URI selection request, and send the second URI selection request to the CBUS server.

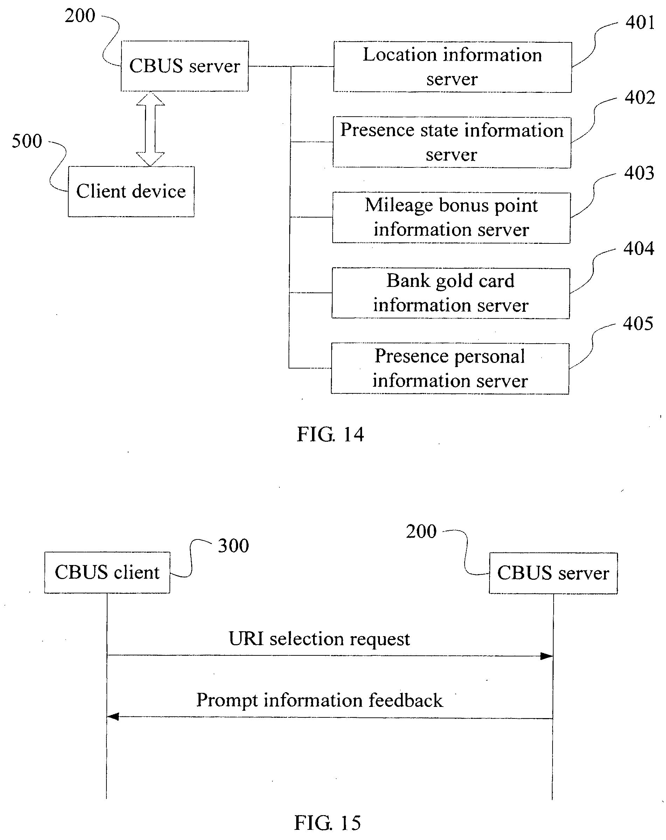

As shown in FIG. 14, a CBUS system is shown in the embodiment. The system includes a CBUS server 200 and a client device 500. The CBUS server 200 sends capability information of the CBUS server to the client device 500, and the client device 500 sends a URI selection request to the CBUS server 200 according to the capability information. Alternatively, as shown in FIG. 15, the CBUS client 300 sends a URI selection request to the CBUS server 200, and the CBUS server 200 receives the URI selection request, obtains the capability information selected by the CBUS client 300 from the URI selection request, judges whether the capability information selected by the CBUS client 300 belongs to the capability information of the CBUS server 200, and if not, feeds back error and prompt information to the CBUS client 300, to notify the CBUS client 300 that the CBUS server 200 currently does not support to obtain information from a certain information server, and returns a list of information servers, with which CBUS server 200 currently supports to interact, to the CBUS client 300.

### Embodiment 1

In order to meet the URI selection request submitted by the CBUS client, the CBUS server needs to obtain information from multiple different information servers, and the CBUS client as the requester needs to know whether the CBUS server supports interaction with the information servers before submitting the request, that is, the CBUS client needs to know in advance, the type of assessment information that can be obtained by the CBUS server.

As shown in FIG. 4, the information servers interacting with the CBUS server 200 are a location information server 401, a presence state information server 402, a mileage bonus point information server 403, a bank gold card information server 404, and a presence personal information server 405.

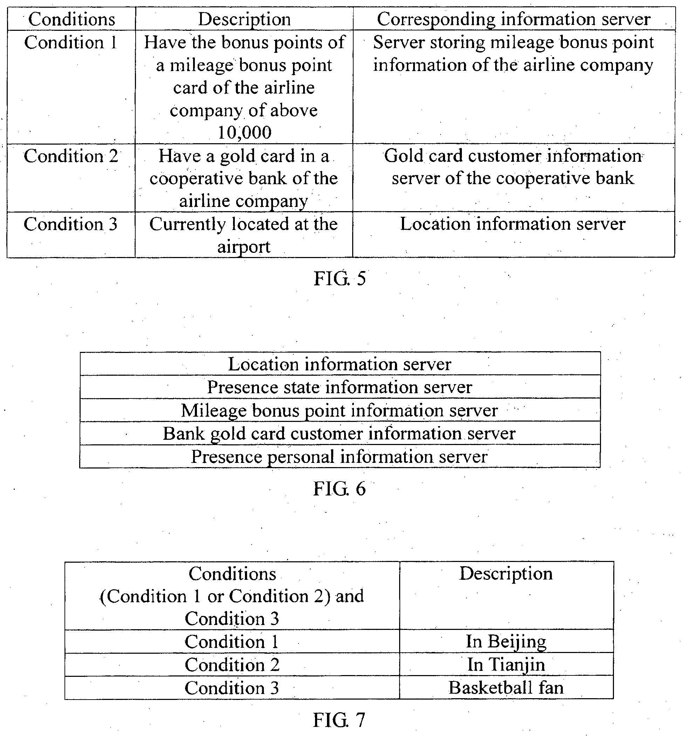

The airline company intends to provide an upgrade service for target customers. As shown in FIG. 5, the target customers are customers that have the bonus points of a mileage bonus point card of the airline company of above 10,000 and have a gold card in a cooperative bank of the airline company, and are currently located at the airport. The selection conditions included in the request of the airline company involve obtaining bonus point information of a user from a mileage bonus point information server of the airline company, obtaining information whether the user is a gold card owner from an information server of the cooperative bank, and obtaining location information of the user from a location server.

Before submitting the conditions to the CBUS server, the requester (that is, the airline company) firstly sends a capability information query request to the CBUS server, so as to query a list of information servers currently supported by the CBUS server. After receiving the capability information query request of the requester, the CBUS server returns a list of information servers currently supported by the CBUS server to the requester (as shown in FIG. 6).

After obtaining the list of information servers returned by the CBUS server, the airline company (that is, the requester) judges that the CBUS server may support the URI selection request, and then the airline company submits the selection request to the CBUS server for selection.

### Embodiment 2

As shown in FIG. 4, information servers interacting with the CBUS server 200 are the location information server 401, the presence state information server 402, the mileage bonus point information server 403, the bank gold card information server 404, and the presence personal information server 405.

After retrieving the information from the information servers, the CBUS server 200 further needs to analyze and assess the information and the conditions submitted by the CBUS client, so as to finally obtain a result meeting the requirements of the CBUS client. The analysis and assessment procedure involves logical judgment of "AND", "OR", and "NON" on the information corresponding to the multiple conditions, and may also involve comparison of the retrieved information, for example, the largest, the smallest, the farthest, and the nearest comparison.

The CBUS client not only needs to know the type of assessment information that can be obtained by CBUS server, and may also need to know the operation capability of the CBUS server, for example, operation capability for performing logical judgment such as "AND", "OR", and "NON", information comparison and judgment, and random operation.

After adding or reducing a certain capability, the CBUS server may interact with the CBUS client, such that the CBUS client updates the received capability information into a display list of the capability information, and thus avoiding that the logical relation between multiple conditions in the selection request submitted by the CBUS client is not in the range supported by the CBUS server.

As shown in FIG. 7, a URI selection request of Tom is shown. Tom intends to chat with basketball fans currently located in Beijing or Tianjin in a network chat room, and the relation among the three conditions is: (condition 1 OR condition 2) AND condition 3.

If the CBUS server supports the logical operation of "AND" and "OR", the CBUS client displays options of "AND" and "OR" on the interface displayed to Tom for submitting conditions, and Tom may select to connect multiple conditions including logical operation that he intends to submit. If the CBUS server dose not support the logical operation of "OR", the CBUS client will not display option of "OR" to Tom, and Tom knows that the CBUS server does not support the capability, and will not submit the conditions including "OR".

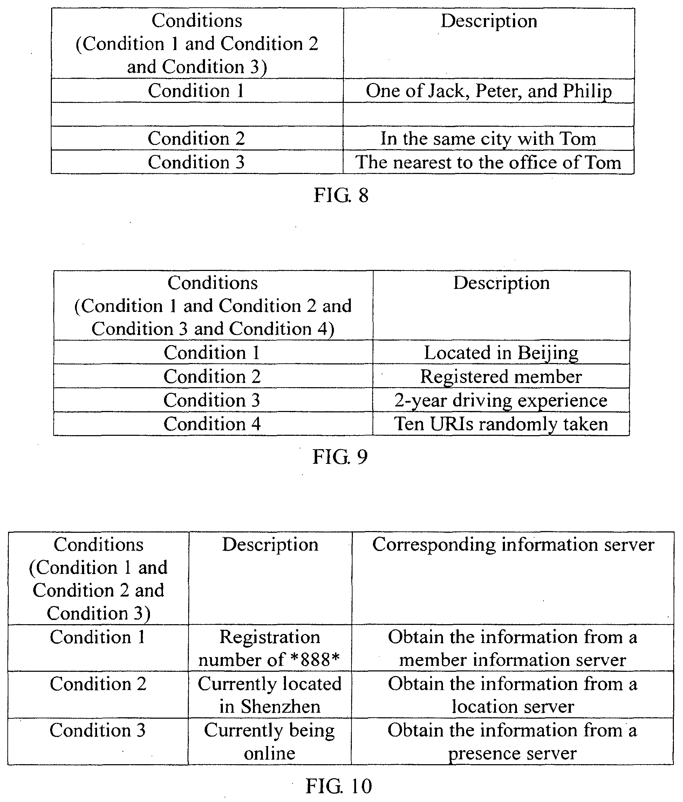

As shown in FIG. 8, a URI selection request of Tom is shown. Tom intends to find one from Jack, Peter, and Philip currently located in the same city with him and being the nearest to his office for supper.

Not only the conditions submitted by Tom define the URI range of the user and require the CBUS server to obtain the location information of the user, but also condition 3 requires the CBUS server to have the capability of performing distance comparison and obtaining the nearest distance.

If the CBUS server has the capability of obtaining the location information, and is newly added with the capability of performing distance judgment and comparison on the distance of retrieved locations, the CBUS server may notify the CBUS client of the newly added capability, and update the condition submitting interface of the CBUS client, such that Tom can select the option of distance analysis and judgment when submitting conditions through the CBUS client, and the submitted conditions will meet the requirements better.

As shown in FIG. 9, a URI selection request of an automobile member center is shown. The automobile member center hopes that the CBUS server may randomly return user URIs of ten registered members currently located in Beijing and having 2-year driving experience for test drive and experience activities of new car. The submitted conditions not only need the CBUS server to have the capability of obtaining information from the location server and the registered member information server, but also need the CBUS server to have the capability of taking random numbers and performing random operation.

If the CBUS server has the capability of performing random operation, the CBUS server interacts with the CBUS client, such that the CBUS client knows that the CBUS server currently has the capability, and updates the condition submitting interface of the CBUS client displayed to the user, such that the CBUS client can select the random operation capability when submitting conditions, and input a required user URI number after the random operation.

If the CBUS server does not have the capability and has not interacted with the CBUS client to notify its capability information to the CBUS client, but the URI selection request of the CBUS client includes the condition of "taking a random number", at this time, the CBUS server feeds back prompt information to the CBUS client, in which the prompt information may include error information or the capability information currently owned by the CBUS server.

### Embodiment 3

In addition to the information of information server with which the CBUS server supports to interact and the information of operation capability (for example, analysis and assessment capability) supported by the CBUS server, the CBUS server may also improve the capability, so as to allow the conditions submitted by the CBUS client to include more information, for example, allow the conditions submitted by the CBUS client to include a wildcard serving as special character, so as to facilitate the description of the user request information that the request intends to obtain by using the wildcard by the user. If the CBUS server supports that the conditions carry more different special characters, the CBUS client is notified of providing the options and meanings of the special characters for the user in real time. That is to say, the CBUS server not only provides the information of the type of assessment information that can be obtained by the CBUS server and the information of the operation capability of the CBUS server for the CBUS client, but also provides the information of special character processing capability of the CBUS server for the CBUS client.

As shown in FIG. 10, a URI selection request list of a member center is shown. The member center intends to notify all users having a member registration number including characters 888, currently located in Shenzhen, and being online of receiving their prizes. As the requester, the CBUS client may use a wildcard to describe the condition of the registration number including characters 888.

The CBUS server supports the use of special character "*" for describing the condition, and notifies the CBUS client that the CBUS server has the special character "*" description capability, and the CBUS client allows the user to submit the conditions. The CBUS server receives the request submitted by the requester, analyzes the condition in the request that the registration number is "*888*", and obtains user URIs of which the registration number includes 888 from the member information server, or the CBUS server obtains the registration number information of all the members from the member information server, and then analyzes and assesses the registration number information with conditions submitted by the requester, so as to select user URIs of which the registration number includes 888.

As shown in FIGs. 11 and 12, a URI selection request list of a web administrator is shown. The web administrator intends to initiate an online questionnaire survey on all the members that are currently online and like football and have an IP in a range of 10.121.32.10 to 10.121.32.19.

If the CBUS server does not support the use of a special character (wildcard "?") for describing the URI selection request, the CBUS server interacts with the CBUS client, such that the CBUS client knows that the CBUS server currently does not have the capability; however, if the URI selection request includes the condition of wildcard "?", the CBUS client judges whether the capability information involved in the generated URI selection request including wildcard "?" belongs to the received Capability information of the CBUS server, and if not, prompts error information. As shown in FIG. 11, the description of the URI selection request submitted by the requester (that is the web administrator) is shown.

If the CBUS server supports the use of wildcard "?" for describing the condition, the CBUS server notifies the CBUS client of the current capability information of itself, such that the CBUS client allows the user to use the wildcard to describe the condition and submit the condition: after receiving the request submitted by the CBUS client (as shown in FIG. 12), when analyzing and assessing the conditions included in the request, the CBUS server will automatically match the condition of "IP is 10.121.32.1?" into "IP is in 10.121.32.10 10.121.32.11 10.121.32.12 10.121.32.13 10.121.32.14 10.121.32.15 10.121.32.16 10.121.32.17 10.121.32.18 10.121.32.19" according to the definition of the wildcard.

### Embodiment 4

Sometimes, the CBUS client needs to know the information assessment mode supported by the CBUS server. The information assessment mode includes: a one-off assessment mode, a regular/periodic assessment mode, and/or a re-assessment mode after changes in assessment information, which are described with examples below.

One-off assessment mode: in the previous embodiments, the CBUS server supports the one-off assessment mode, that is, after the CBUS client sends the URI selection request to the CBUS server, the CBUS server performs processing according to the URI selection request, and obtains the user URI(s) that the CBUS client intends to obtain after processing, after sending the user URI(s) to the user, the CBUS server will not perform URI(s) update or re-obtain the URI(s) that the client intends to obtain according to the URI selection request.

Regular/periodic assessment mode: the CBUS server obtains the user URI(s) that the CBUS client intends to obtain in a designated time or a designated period according to the designated assessment time or period in the URI selection request sent by the CBUS client.

For example, a store intends to sample the number of customers at different time everyday through a CBUS service, so as to obtain a distribution curve of the number of customers at different time everyday. If a CBUS client of the store is notified that the CBUS server supports the regular/periodic assessment mode and the CBUS server also supports interaction with the location information server through the capability information sent by the CBUS server, the CBUS client of the store may submits a URI selection request to the CBUS server, to request the CBUS server to obtain the number of customers in the store region at this moment at a designated time. At this time, the CBUS server interacts with the location server at the time designated in the URI selection request, so as to obtain the location information of the customers, and then judges whether the customers are in the store region, and returns the URIs of the customers in the store region at the designated time to the CBUS client.

For example, the store intends to make statistics on the customers in the store region once every period of time (for example, 1 hour) through the CBUS service. If the CBUS client of the store is notified that the CBUS server supports the regular/periodic assessment mode and the CBUS server also supports interaction with the location information server through the capability information sent by the CBUS server, the CBUS client of the store may submit a URI selection request to the CBUS server, to request the CBUS server to obtain the number of customers in the store region at the moment every designated time (for example, 1 hour). At this time, the CBUS server interacts with the location server every designated time, to obtain the location information of customers, then judges which customers are in the store region, and returns the URIs of the customers in the store region at the designated period time to the CBUS client.

Re-assessment mode after changes in the assessment information: the CBUS server continues to obtain the assessment information according to other conditions in the URI selection request in the time period designated in the URI selection request by the CBUS client, and when the obtained assessment information changes, the CBUS server performs re-assessment according to the obtained assessment information and the URI selection request.

For example, Tom intends to invite co-workers currently located in a sale area A for a meeting, and the meeting start time initiated by Tom is 9:30 AM, and the duration of the meeting is 2 hours, when the capability information sent by the CBUS server indicates that the CBUS server supports the re-assessment mode after changes in the assessment information, Tom submits a URI selection request, and in addition to two conditions of "co-workers" and "located in the sale area A", the URI selection request further includes the requirement of "re-assessment after changes in the assessment information" and the time interval of "re-assessment after changes in the assessment information", for example, 9:30-11:30.

After receiving the URI selection request, the CBUS server continues to obtain the information of co-workers of Tom in the sale area A in the time interval 9:30-11:30, when the assessment information changes, for example, the location information of the "co-workers" changes: Jerry in the "co-workers" moves from the sale area A to a sale area B or moves from a sale area B to the sale area A, the CBUS server will perform re-assessment according to the user request submitted by Tom again, and sends the re-assessment result to the client of Tom, such that Tom can control the information of co-works in the sale area A in real time in the time scope, so as to determine whether to send a meeting invitation to the co-workers that newly come to the sale area A, or whether to cancel the meeting invitation to the co-workers that have left the sale area A.

Definitely, before the CBUS server performs re-assessment when the assessment information changes, and sends the re-assessment result to the client of Tom, the CBUS server may also compare the re-assessment result and the assessment result sent by the client of Tom last time, and if the two results are the same, the CBUS server will not send the re-assessment result, if the two results are not the same, the CBUS server will send the re-assessment result.

Through the above description of the implementation, it is clear to persons skilled in the art that the present invention may be accomplished through hardware, or through software plus a necessary universal hardware platform. Based on this, the technical solutions of the present invention may be embodied in the form of a software product. The software product may be stored in a storage media and include several instructions adapted to instruct computer equipment to perform the method according to the embodiments of the present invention. According the technical solutions of the present invention, before submitting a request to the CBUS server, the CBUS client knows exactly the capability information supported by the CBUS server in time, and utilizes the information to describe the conditions better, so as to avoid sending an invalid request. The specific implementation is intended to illustrate the present invention, but not to limit the present invention.

## Claims

1. A method for providing capability information of a Condition Based Uniform Resource Identifiers, URIs, Selection, CBUS, server, comprising:
receiving a capability information query request sent by a CBUS client;
sending the capability information of the CBUS server to the CBUS client according to the capability information query request sent by the CBUS client; and
receiving a first URI selection request generated by the CBUS client according to the capability information.

2. The method according to claim 1,wherein the capability information of the CBUS server comprises:
information of a type of assessment information capable of being obtained by the CBUS server; and/or
information of an information assessment mode supported by the CBUS server; and/or
information of an operation capability of the CBUS server; and/or
information of special character processing capability of the CBUS server,
wherein the capability information query request comprises: at least one of query requests for obtaining the information of the type of the assessment information capable of being obtained by the CBUS server, the information of the information assessment mode supported by the CBUS server, the information of the operation capability of the CBUS server, and the information of the special character processing capability of the CBUS server; and
the sending the capability information of the CBUS server to the CBUS client according to the capability information query request sent by the CBUS client comprises:
returning designated capability information in the capability information query request to the CBUS client, or sending all the capability information of the CBUS server to the CBUS client, according to the capability information query request.

3. The method according to claim 1, wherein the sending the capability information of the CBUS server to the CBUS client comprises:
pushing all the capability information or updated capability information of the CBUS server to the CBUS client.

4. The method according to claim 3, further comprising:
performing a special character processing and/or an operation processing on the received first URI selection request,
wherein the operation processing comprises: a random operation processing and/or a logical operation processing and/or an algebraic operation processing.

5. The method according to claim 3, wherein the supported information assessment mode comprises: a one-off assessment mode, and/or a regular/periodic assessment mode, and/or a re-assessment mode after changes in the assessment information.

6. The method according to claim 1, wherein before the sending the capability information of the CBUS server to the CBUS client, the method further comprises:
receiving a second URI selection request sent by the CBUS client;
determining that capability information requested by the second URI selection request comprises capability information not supported by the CBUS server according to the capability information of the CBUS server; and
feeding back error information and/or the non-supported capability information in the second URI selection request to the CBUS client.

7. A method for providing capability information of a Condition Based Uniform Resource Identifiers, URIs, Selection, CBUS, server, comprising:
sending a capability information query request to a CBUS server;
receiving a capability information of the CBUS server sent by the CBUS server; and
generating a first URI selection request according to the received capability information of the CBUS server; and
sending the first URI selection request to the CBUS server.

8. The method according to claim 7, further comprising:
displaying the received capability information in an interaction interface in a list form;
wherein the generating the first URI selection request according to the received capability information of the CBUS server comprises:
receiving an instruction input by a user according to the list; and
generating the first URI selection request according to the instruction.

9. A Condition Based Uniform Resource Identifiers, URIs, Selection, CBUS, server, comprising:
a capability information sending unit, adapted to send capability information of the CBUS server to a CBUS client; and
a selection request receiving unit, adapted to receive a first URI selection request generated by the CBUS client according to the capability information;
a query request receiving unit, adapted to receive a capability information query request sent by the CBUS client,
wherein the capability information sending unit is adapted to send the capability information to the CBUS client according to the capability information query request.

10. The server according to claim 9, wherein the capability information of the CBUS server comprises:
information of a type of assessment information capable of being obtained by the CBUS server; and/or
information of an information assessment mode supported by the CBUS server; and/or
information of an operation capability of the CBUS server; and/or
information of special character processing capability of the CBUS server,
wherein the query request receiving unit is adapted to receive at least one of query requests for obtaining the information of the type of the assessment information capable of being obtained by the CBUS server, the information of the information assessment mode supported by the CBUS server, the information of the operation capability of the CBUS server, and the information of the special character processing capability of the CBUS server; and
the capability information sending unit is adapted to return designated capability information in the capability information query request to the CBUS client or send all the capability information of the CBUS server to the CBUS client.

11. The server according to claim 9, wherein the capability information sending unit is adapted to push all the capability information or updated capability information of the CBUS server to the CBUS client.

12. The server according to claim 10, further comprising: a selection request processing unit, adapted to perform a special character processing and/or an operation processing on the received first URI selection request,
wherein the operation processing comprises: a random operation processing and/or a logical operation processing and/or an algebraic operation processing.

13. The server according to claim 9, wherein the selection request receiving unit is further adapted to receive a second URI selection request from the CBUS client; and the server further comprises:
a prompt information output unit, adapted to send the capability information of the CBUS server and/or error information and/or non-supported capability information in the second URI selection request to the CBUS client, when judging that the second URI selection request is not supported according to the capability information of the CBUS server.

14. A Condition Based Uniform Resource Identifiers, URIs, Selection, CBUS, client device, comprising:
a capability information receiving unit, adapted to receive capability information of a CBUS server sent by the CBUS server; and
a selection request sending unit, adapted to generate a first URI selection request according to the received capability information of the CBUS server, and send the first URI selection request to the CBUS server;
wherein the client device is further configured to send a capability information query request to the CBUS server.

15. The client device according to 14, wherein the selection request sending unit comprises:
a selection request generation unit, adapted to generate the URI selection request according to the capability information;
a capability information extraction unit, adapted to extract the capability information in the URI selection request; and
a capability information judging unit, adapted to judge whether the capability information involved in the generated URI selection request belongs to the received capability information, and if yes, send the URI selection request to the CBUS server; if not, prompt error information.

## Patentansprüche

1. Ein Verfahren zum Vorsehen von Capability- bzw. Fähigkeitsinformation eines CBUS-Servers (CBUS = Condition Based URIs Selection, URIs = Uniform Resource Identifiers), das Folgendes aufweist:
Empfangen einer Fähigkeitsinformationsabfrageanfrage, die von einem CBUS-Client gesendet wird;
Senden der Fähigkeitsinformation des CBUS-Servers durch den CBUS-Client gemäß der Fähigkeitsinformationsabfrageanfrage, die durch den CBUS-Client gesendet wird; und
Empfangen einer ersten URI-Auswahlanfrage, die durch den CBUS-Client generiert wird, gemäß der Fähigkeitsinformation.

2. Verfahren nach Anspruch 1, wobei die Fähigkeitsinformation des CBUS-Servers Folgendes aufweist:
Information über eine Art von Beurteilungsinformation, die von dem CBUS-Server erlangt werden kann; und/oder
Information über einen Informationsbeurteilungsmodus, der durch den CBUS-Server unterstützt wird; und/oder
Information über eine Operationsfähigkeit des CBUS-Servers; und/oder Information über eine Verarbeitungsfähigkeit von Sonderzeichen bzw. spezieller Zeichen des CBUS-Servers,
wobei die Fähigkeitsinformationsabfrageanfrage wenigstens eines von Folgendem aufweist: Abfrageanfragen zum Erlangen der Information der Art von Beurteilungsinformation, die durch den CBUS-Server erlangt werden kann, die Information über den Informationsbeurteilungsmodus, der von dem CBUS-Server unterstützt wird, die Information über die Operationsfähigkeit des CBUS-Servers und die Information der Sonderzeichenverarbeitungsfähigkeit des CBUS-Servers; und
wobei das Senden der Fähigkeitsinformation des CBUS-Servers an den CBUS-Client gemäß der Fähigkeitsinformationsabfrageanfrage, die von dem CBUS-Client gesendet wird, Folgendes aufweist:
Zurückgeben designierter Fähigkeitsinformation in der Fähigkeitsinformationsabfrageanfrage an den CBUS-Client oder Senden aller Fähigkeitsinformation des CBUS-Servers an den CBUS-Client gemäß der Fähigkeitsinformationsabfrageanfrage.

3. Verfahren nach Anspruch 1, wobei das Senden der Fähigkeitsinformation des CBUS-Servers an den CBUS-Client Folgendes aufweist:
Pushen bzw. Liefern der gesamten Fähigkeitsinformation oder aktualisierten Fähigkeitsinformation des CBUS-Servers an den CBUS-Client.

4. Verfahren nach Anspruch 3, das weiter Folgendes aufweist:
Durchführen einer Sonderzeichenverarbeitung und/oder einer Operationsverarbeitung an der empfangenen ersten URI-Auswahlanfrage,
wobei die Operationsverarbeitung Folgendes aufweist: eine Verarbeitung einer Zufallsoperation und/oder eine Verarbeitung einer logischen Operation und/oder eine Verarbeitung einer algebraischen Operation.

5. Verfahren nach Anspruch 3, wobei der unterstützte Informationsbeurteilungsmodus Folgendes aufweist: einen Einmal-Beurteilungsmodus und/oder einen regelmäßigen/periodischen Beurteilungsmodus und/oder einen Neu- bzw. Wiederbeurteilungsmodus nach Veränderungen in der Beurteilungsinformation.

6. Verfahren nach Anspruch 1, wobei vor dem Senden der Fähigkeitsinformation des CBUS-Servers an den CBUS-Client das Verfahren weiter Folgendes aufweist:
Empfangen der zweiten URI-Auswahlabfrage, die durch den CBUS-Client gesendet wird;
Bestimmen, dass die Fähigkeitsinformation, die von der zweiten URI-Auswahlanfrage abgefragt wird, Fähigkeitsinformation aufweist, die nicht durch den CBUS-Server gemäß der Fähigkeitsinformation des CBUS-Servers unterstützt wird; und
Rückkoppeln von Fehlerinformation und/oder Information über nicht unterstützte Fähigkeiten in der zweiten URI-Auswahlanfrage an den CBUS-Client.

7. Ein Verfahren zum Vorsehen von Capability- bzw. Fähigkeitsinformation eines CBUS-Servers (CBUS = Condition Based URIs Selection, URIs = Uniform Resource Identifiers), das Folgendes aufweist:
Senden einer Fähigkeitsinformationsabfrageanfrage an einen CBUS-Server;
Empfangen einer Fähigkeitsinformation des CBUS-Servers, die durch den CBUS-Server gesendet wird; und
Generieren einer ersten URI-Auswahlanfrage gemäß der empfangenen Fähigkeitsinformation des CBUS-Servers; und
Senden der ersten URI-Auswahlanfrage an den CBUS-Server.

8. Verfahren nach Anspruch 7, das weiter Folgendes aufweist:
Anzeigen der empfangenen Fähigkeitsinformation in einer Interaktionsschnittstelle in einer Listenform;
wobei das Generieren der ersten URI-Auswahlanfrage gemäß der empfangenen Fähigkeitsinformation des CBUS-Servers Folgendes aufweist:
Empfangen einer Instruktions- bzw. Befehlseingabe durch einen Nutzer gemäß der Liste; und
Generieren der erste URI-Auswahlanfrage gemäß der Instruktion.

9. Ein CBUS-Server (CBUS = Condition Based URIs Selection, URIs = Uniform Resource Identifiers), der Folgendes aufweist:
eine Fähigkeitsinformationssendeeinheit, die ausgelegt ist zum Senden von Fähigkeitsinformation des CBUS-Servers an einen CBUS-Client; und
eine Auswahlanfrageempfangseinheit, die ausgelegt ist zum Empfangen einer ersten URI-Auswahlanfrage, die durch den CBUS-Client generiert wird, gemäß der Fähigkeitsinformation;
eine Abfrageanfrageempfangseinheit, die ausgelegt ist zum Empfangen einer Fähigkeitsinformationsabfrageanfrage, die durch den CBUS-Client gesendet wird,
wobei die Fähigkeitsinformationssendeeinheit ausgelegt ist zum Senden der Fähigkeitsinformation an den CBUS-Client gemäß der Fähigkeitsinformationsabfrageanfrage.

10. Server gemäß Anspruch 9, wobei die Fähigkeitsinformation des CBUS-Servers Folgendes aufweist:
Information über eine Art von Beurteilungsinformation, die von dem CBUS-Server erlangt werden kann; und/oder
Information über einen Informationsbeurteilungsmodus, der durch den CBUS-Server unterstützt wird; und/oder
Information über eine Operationsfähigkeit des CBUS-Servers; und/oder Information über eine Verarbeitungsfähigkeit von Sonderzeichen bzw. spezieller Zeichen des CBUS-Servers,
wobei die Fähigkeitsinformationsabfrageanfrage ausgelegt ist zum Empfangen von wenigstens einem von Folgendem: Abfrageanfragen zum Erlangen der Information der Art von Beurteilungsinformation, die durch den CBUS-Server erlangt werden kann, der Information über den Informationsbeurteilungsmodus, der von dem CBUS-Server unterstützt wird, der Information über die Operationsfähigkeit des CBUS-Servers und der Information der Sonderzeichenverarbeitungsfähigkeit des CBUS-Servers; und
wobei die Fähigkeitsinformationssendeeinheit ausgelegt ist zum Zurückgeben von designierter Fähigkeitsinformation in der Fähigkeitsinformationsabfrageanfrage an den CBUS-Client oder zum Senden der gesamten Fähigkeitsinformation des CBUS-Servers an den CBUS-Client.

11. Server nach Anspruch 9, wobei die Fähigkeitsinformationssendeeinheit ausgelegt ist zum Pushen bzw. Liefern der gesamten Fähigkeitsinformation oder aktualisierten Fähigkeitsinformation des CBUS-Servers an den CBUS-Client.

12. Server nach Anspruch 10, der weiter Folgendes aufweist: eine Auswahlanfrageverarbeitungseinheit, die ausgelegt ist zum Durchführen einer Sonderzeichenverarbeitung und/oder einer Operationsverarbeitung an der empfangenen ersten URI-Auswahlanfrage,
wobei die Operationsverarbeitung Folgendes aufweist: eine Verarbeitung einer Zufallsoperation und/oder eine Verarbeitung einer logischen Operation und/oder eine Verarbeitung einer algebraischen Operation.

13. Server nach Anspruch 9, wobei die Auswahlanfrageempfangseinheit weiter ausgelegt ist zum Empfangen einer zweiten URI-Auswahlanfrage von dem CBUS-Client; und wobei der Server weiter Folgendes aufweist:
eine Veranlassungsinformationsausgabeeinheit, die ausgelegt ist zum Senden von Fähigkeitsinformation des CBUS-Servers und/oder von Fehlerinformation und/oder von nicht unterstützter Fähigkeitsinformation in der zweiten URI-Auswahlanfrage an den CBUS-Client, wenn sie entscheidet, dass die zweite URI-Auswahlanfrage gemäß der Fähigkeitsinformation des CBUS-Servers nicht unterstützt wird.

14. Eine CBUS-Client-Einrichtung (CBUS = Condition Based URIs Selection, URIs = Uniform Resource Identifiers), die Folgendes aufweist:
eine Capability- bzw. Fähigkeitsinformationsempfangseinheit, die ausgelegt ist zum Empfangen von Fähigkeitsinformation eines CBUS-Servers, die durch den CBUS-Server gesendet wird; und
eine Auswahlanfrageeinheit, die ausgelegt ist zum Generieren einer ersten URI-Auswahlanfrage gemäß der empfangenen Fähigkeitsinformation des CBUS-Servers, und zum Senden der ersten URI-Auswahlanfrage an den CBUS-Server;
wobei die Client-Einrichtung weiter konfiguriert ist zum Senden einer Fähigkeitsinformationsabfrageanfrage an den CBUS-Server.

15. Clienteinrichtung nach Anspruch 14, wobei die Auswahlanfragesendeeinheit Folgendes aufweist:
eine Auswahlanfragegenerierungseinheit, die ausgelegt ist zum Generieren der URI-Auswahlanfrage gemäß der Fähigkeitsinformation;
eine Fähigkeitsinformationsextraktionseinheit, die ausgelegt ist zum Extrahieren der Fähigkeitsinformation in der URI-Auswahlanfrage; und
eine Fähigkeitsinformationsbeurteilungseinheit, die ausgelegt ist zum Entscheiden, ob die Fähigkeitsinformation, die in der generierten URI-Auswahlanfrage eingebunden ist, zu der empfangenen Fähigkeitsinformation gehört, und wenn dies der Fall ist, zum Senden der URI-Auswahlanfrage an den CBUS-Server; wenn dies nicht der Fall ist, zum Veranlassen von Fehlerinformation.

## Revendications

1. Un procédé de fourniture d'informations de capacité d'un serveur de sélection d'identifiants de ressources uniformes, URI, basé sur une condition, CBUS, comprenant :
la réception d'une requête d'interrogation d'informations de capacité envoyée par un client CBUS,
l'envoi des informations de capacité du serveur CBUS au client CBUS selon la requête d'interrogation d'informations de capacité envoyée par le client CBUS, et
la réception d'une première requête de sélection URI générée par le client CBUS selon les informations de capacité.

2. Le procédé selon la Revendication 1, où les informations de capacité du serveur CBUS comprennent :
des informations d'un type d'informations d'évaluation pouvant être obtenu par le serveur CBUS, et/ou
des informations d'un mode d'évaluation d'informations pris en charge par le serveur CBUS, et/ou
des informations d'une capacité de fonctionnement du serveur CBUS, et/ou
des informations de capacité de traitement de caractères spéciaux du serveur CBUS,
où la requête d'interrogation d'informations de capacité comprend : au moins une requête des requêtes d'interrogation destinée à l'obtention des informations du type des informations d'évaluation pouvant être obtenu par le serveur CBUS, des informations du mode d'évaluation d'informations pris en charge par le serveur CBUS, des informations de la capacité de fonctionnement du serveur CBUS et des informations de la capacité de traitement de caractères spéciaux du serveur CBUS, et
l'envoi des informations de capacité du serveur CBUS au client CBUS selon la requête d'interrogation d'informations de capacité envoyée par le client CBUS comprend :
le renvoi d'informations de capacité désignées dans la requête d'interrogation d'informations de capacité au client CBUS ou l'envoi de toutes les informations de capacité du serveur CBUS au client CBUS selon la requête d'interrogation d'informations de capacité.

3. Le procédé selon la Revendication 1, où l'envoi des informations de capacité du serveur CBUS au client CBUS comprend :
le transfert de toutes les informations de capacité ou d'informations de capacité actualisées du serveur CBUS au client CBUS.

4. Le procédé selon la Revendication 3, comprenant en outre :
l'exécution d'un traitement de caractères spéciaux et/ou d'un traitement d'opération sur la première requête de sélection URI reçue,
où le traitement d'opération comprend : un traitement d'opération aléatoire et/ou un traitement d'opération logique et/ou un traitement d'opération algébrique.

5. Le procédé selon la Revendication 3, où le mode d'évaluation d'informations pris en charge comprend : un mode d'évaluation ponctuel et/ou un mode d'évaluation périodique/régulier et/ou un mode de réévaluation après des modifications dans les informations d'évaluation.

6. Le procédé selon la Revendication 1, où, avant l'envoi des informations de capacité du serveur CBUS au client CBUS, le procédé comprend en outre :
la réception d'une deuxième requête de sélection URI envoyée par le client CBUS,
la détermination que des informations de capacité demandées par la deuxième requête de sélection URI comprennent des informations de capacité non prises en charge par le serveur CBUS selon les informations de capacité du serveur CBUS, et
l'envoi en retour d'informations d'erreur et/ou d'informations de capacité non prises en charge dans la deuxième requête de sélection URI au client CBUS.

7. Un procédé de fourniture d'informations de capacité d'un serveur de sélection d'identifiants de ressources uniformes, URI, basé sur une condition, CBUS, comprenant :
l'envoi d'une requête d'interrogation d'informations de capacité à un serveur CBUS,
la réception d'informations de capacité du serveur CBUS envoyées par le serveur CBUS, et
la génération d'un première requête de sélection URI selon les informations de capacité reçues du serveur CBUS, et
l'envoi de la première requête de sélection URI au serveur CBUS.

8. Le procédé selon la Revendication 7, comprenant en outre :
l'affichage des informations de capacité reçues dans une interface d'interaction sous forme d'une liste,
où la génération de la première requête de sélection URI selon les informations de capacité reçues du serveur CBUS comprend :
la réception d'une instruction entrée par un utilisateur en fonction de la liste, et
la génération de la première requête de sélection URI en fonction de l'instruction.

9. Un serveur de sélection d'identifiants de ressources uniformes, URI, basé sur une condition, CBUS, comprenant :
une unité d'envoi d'informations de capacité adaptée de façon à envoyer des informations de capacité du serveur CBUS à un client CBUS, et
une unité de réception de requête de sélection adaptée de façon à recevoir une première requête de sélection URI générée par le client CBUS selon les informations de capacité,
une unité de réception de requête d'interrogation adaptée de façon à recevoir une requête d'interrogation d'informations de capacité envoyée par le client CBUS,
où l'unité d'envoi d'informations de capacité est adaptée de façon à envoyer les informations de capacité au client CBUS selon la requête d'interrogation d'informations de capacité.

10. Le serveur selon la Revendication 9, où les informations de capacité du serveur CBUS comprennent :
des informations d'un type d'informations d'évaluation pouvant être obtenu par le serveur CBUS, et/ou
des informations d'un mode d'évaluation d'informations pris en charge par le serveur CBUS, et/ou
des informations d'une capacité de fonctionnement du serveur CBUS, et/ou
des informations de capacité de traitement de caractères spéciaux du serveur CBUS,
où l'unité de réception de requête d'interrogation est adaptée de façon à recevoir au moins une requête des requêtes d'interrogation pour l'obtention des informations du type des informations d'évaluation pouvant être obtenu par le serveur CBUS, des informations du mode d'évaluation d'informations pris en charge par le serveur CBUS, des informations de la capacité de fonctionnement du serveur CBUS et des informations de la capacité de traitement de caractères spéciaux du serveur CBUS, et
l'unité d'envoi d'informations de capacité est adaptée de façon à renvoyer des informations de capacité désignées dans la requête d'interrogation d'informations de capacité au client CBUS ou à envoyer toutes les informations de capacité du serveur CBUS au client CBUS.

11. Le serveur selon la Revendication 9, où l'unité d'envoi d'informations de capacité est adaptée de façon à transférer toutes les informations de capacité ou des informations de capacité actualisées du serveur CBUS au client CBUS.

12. Le serveur selon la Revendication 10, comprenant en outre : une unité de traitement de requête de sélection adaptée de façon à exécuter un traitement de caractères spéciaux et/ou un traitement d'opération sur la première requête de sélection URI reçue,
où le traitement d'opération comprend : un traitement d'opération aléatoire et/ou un traitement d'opération logique et/ou un traitement d'opération algébrique.

13. Le serveur selon la Revendication 9, où l'unité de réception de requête de sélection est adaptée en outre de façon à recevoir une deuxième requête de sélection URI à partir du client CBUS, et le serveur comprend en outre :
une unité de production en sortie d'informations d'invite adaptée de façon à envoyer les informations de capacité du serveur CBUS et/ou des informations d'erreur et/ou des informations de capacité non prises en charge dans la deuxième requête de sélection URI au client CBUS lorsqu'il est estimé que la deuxième requête de sélection URI n'est pas prise en charge en fonction des informations de capacité du serveur CBUS.

14. Un dispositif client de sélection d'identifiants de ressources uniformes, URI, basé sur une condition, CBUS, comprenant :
une unité de réception d'informations de capacité adaptée de façon à recevoir des informations de capacité d'un serveur CBUS envoyées par le serveur CBUS, et
une unité d'envoi de requête de sélection adaptée de façon à générer une première requête de sélection URI selon les informations de capacité reçues du serveur CBUS et à envoyer la première requête de sélection URI au serveur CBUS, où le dispositif client est configuré en outre de façon à envoyer une requête d'interrogation d'informations de capacité au serveur CBUS.

15. Le dispositif client selon la Revendication 14, où l'unité d'envoi de requête de sélection comprend :
une unité de génération de requête de sélection adaptée de façon à générer la requête de sélection URI selon les informations de capacité,
une unité d'extraction d'informations de capacité adaptée de façon à extraire les informations de capacité du requête de sélection URI, et
une unité d'estimation d'informations de capacité adaptée de façon à estimer si les informations de capacité impliquées dans la requête de sélection URI générée appartiennent aux informations de capacité reçues, et si oui, de façon à envoyer la requête de sélection URI au serveur CBUS, si non, de façon à solliciter des informations d'erreur.
